# FASCICULE DE BREVET EUROPEEN

(11) **EP 0 633 175 B1**
(45) Date de publication et mention de la délivrance du brevet: **11.06.1997**
(21) Numéro de dépôt: 94401493.5
(22) Date de dépôt: 30.06.1994
(51) Int. Cl.: B62B 1/14, B65D 90/18, B60P 1/64

(54) **Train amovible pour le roulage directif d'une charge**
Abnehmbares Fahrgestell zum gesteuerten Verfahren einer Last
Removable chassis for the directed carriage of a load

(30) Priorité: 05.07.1993 FR 9308197
(43) Date de publication de la demande: 11.01.1995
(73) Titulaire: AEROSPATIALE Société Nationale Industrielle, 75781 Paris Cédex 16 (FR)
(72) Inventeur: Florentin, Yves, F-78180 Montigny-le-Bretonneux (FR); Roustant, Edmond, F-91230 Montgeron (FR)
(74) Mandataire: Rinuy, Santarelli

(56) Documents cités:
- DE-A- 3 830 530
- US-A- 4 570 959

## Description

L'invention concerne le roulage directif d'une charge telle qu'un conteneur ou un plateau porte-matériel destinée à être déplacée entre des zones en lesquelles elle doit en principe reposer directement, sans l'intermédiaire de roues, et dans une position bien précise. Elle concerne plus particulièrement la manutention par la force humaine de conteneurs de masse moyenne (typiquement de l'ordre de quelques centaines de kilos), contenant par exemple des munitions ou des équipements à accrocher sous un avion.

Les moyens de manutention actuellement connus pour le déplacement manuel (par la force humaine) de conteneurs se composent habituellement de deux modules ou trains de roulage, respectivement montés à l'avant et à l'arrière du conteneur, qui permettent à la fois de supporter et de déplacer ce dernier.

Généralement l'un des modules est directif, tandis que l'autre est rigide. De ce fait, au cours des déplacements et surtout lors de l'approche finale pour la mise à poste du conteneur dans une position de consigne précise (par exemple sous une portion d'aéronef à laquelle on veut fixer le contenu du conteneur), il est nécessaire d'effectuer de très nombreuses manoeuvres avec de multiples braquages (ces manoeuvres sont d'autant plus nombreuses que le rayon de braquage est grand). Il en résulte une mise en place longue et laborieuse.

D'autre part, le déplacement de conteneurs et charges dans des lieux divers (par exemple soutes, hangars, ascenseurs, pont d'envol sur porte-avions) avec passages d'obstacles (notamment rampes simples ou doubles) nécessite en pratique divers moyens spécifiques de manutention pour opérer en conformité avec les normes requises de sécurité. En particulier, il est nécessaire d'assurer la stabilité (empêcher tout basculement (ce qui conduit à limiter l'angle de braquage)) et de préférence l'immobilisation de la charge en cours de roulage en cas de défaillance des opérateurs. Le besoin se fait en outre sentir d'avoir des matériels polyvalents, afin de réduire le nombre total de moyens de manutention à garder à disposition.

L'invention a ainsi pour objet un train amovible pour le roulage directif d'une charge, qui soit adapté à coopérer de manière simple avec cette charge en vue de son soulèvement et de son roulage, qui autorise un grand angle de braquage pour un angle de manoeuvre moindre (typiquement de 50° pour l'angle de braquage de 70°), tout en garantissant une bonne stabilité de cette charge en cours de roulage même en configuration de braquage maximum (y compris dans l'hypothèse où cette charge serait munie en chacune de ses extrémités d'un train amovible de roulage directif qui tous deux seraient en configuration de braquage maximum), en maintenant à un niveau faible le soulèvement de la charge nécessaire pour amener celle-ci en sa position de roulage, qui admette avantageusement un système d'immobilisation soit en position de roulage (charge à l'arrêt) soit en cas de défaillance de l'opérateur (chute par exemple), et ce avec une structure simple et robuste.

En fait, on connaît déjà d'après les documents FR-2.597.807 et FR-2.647.731, un dispositif de manutention-roulage destiné à être monté sur roues et adapté à soulever une extrémité d'un conteneur en vue de son roulage. Le dispositif comporte un tablier muni de moyens pour sa fixation amovible à une face du conteneur, un châssis monté sur un essieu articulé autour d'un axe vertical, un chariot coulissant le long de ce châssis et articulé au tablier et un système à vérin articulé au tablier et au châssis pour contrôler leur inclinaison relative. En fonctionnement, on accroche ce dispositif au conteneur, puis on active le système à vérin en sorte de soulever l'extrémité du conteneur puis de faire glisser sous cette extrémité la partie du châssis à laquelle est articulée l'essieu.

Il apparaît que ce dispositif ne satisfait pas au problème technique précité dans la mesure où tout d'abord il n'autorise pas un grand angle de braquage à moins de mettre en péril la stabilité du conteneur (plus on fait tourner son essieu plus on risque de basculer transversalement). D'autre part une source d'énergie hydraulique est nécessaire. Enfin,rien n'est prévu pour garantir une immobilisation en cas de défaillance des opérateurs en cours de roulage. De plus les articulations entre le châssis et le tablier, qui sont fortement sollicitées lors des opérations de soulèvement et de dépose, nuisent à la fois à la rigidité et à la robustesse de l'ensemble. Il est à noter que ce document ne se préoccupe pas de roulage manuel mais plutôt de roulage motorisé puisqu'il nécessite une source motrice annexe (voir ci-dessus) et envisage la constitution d'ensembles routiers capables de se déplacer à des vitesses de l'ordre de 100 km/h.

L'invention propose, pour résoudre le problème technique précité, un dispositif pour le soulèvement, le roulage directif et la dépose d'une charge, comportant :
- un train amovible comportant un châssis, un ensemble directeur et une barre orientable de manoeuvre, ce châssis comportant, en une partie avant, des moyens fixes d'ancrage incluant en partie haute des moyens de soulèvement et en partie basse de premiers moyens de butée et de verrouillage, cet ensemble directeur comportant deux roues directrices montées dans des chapes individuellement articulées sur le châssis autour d'arbres sensiblement verticaux décalés transversalement l'un par rapport à l'autre et un ensemble de biellettes adapté à maintenir en permanence le parallélisme des roues et incluant deux biellettes longitudinales articulées sur les chapes autour d'arbres sensiblement horizontaux et une biellette transversale articulée en ses extrémités aux biellettes longitudinales autour d'arbres sensiblement verticaux, et cette barre de manoeuvre étant munie d'une poignée de préhension destinée à un opérateur et étant articulée au châssis par une double articulation et à la biellette transversale autour d'un pivot sensiblement vertical, cette barre de manoeuvre et ce châssis étant en outre munis de moyens complémentaires de rigidification temporaire destinés à bloquer, à volonté, la barre de manoeuvre en une orientation prédéterminée vis à vis du châssis,
- une plaque d'ancrage comportant en partie haute des moyens de retenue et en partie basse de seconds moyens de butée et de verrouillage, ces moyens de retenue étant adaptés à coiffer par au-dessus les moyens de soulèvement, en sorte de former conjointement une articulation temporaire d'axe transversal, et déboitable seulement par abaissement des moyens de soulèvement vis à vis des moyens de retenue, les premier et second moyens de butée et de verrouillage étant adaptés à coopérer en sorte de verrouiller, lorsque coopèrent les moyens de retenue et de soulèvement, le châssis et la plaque en une configuration dite de roulage, cette plaque d'ancrage étant destinée à être fixée à une extrémité de la charge à une hauteur telle que lorsque le châssis est dans ladite configuration de roulage, les moyens de soulèvement sont situés plus haut que les moyens de retenue.

Selon des caractéristiques préférées de l'invention, éventuellement combinées :
- le train amovible comporte des moyens d'immobilisation comportant des patins de frein solidaires des biellettes transversales de l'ensemble directeur, et des plaquettes de frein interposées entre ces patins de frein et les roues, le freinage variant avec l'inclinaison vers le bas de la barre de manoeuvre et de la biellette transversale,
- les plaquettes de frein sont interposées horizontalement et maintenues verticalement sur des supports liés aux chapes,
- les moyens de soulèvement comportent au moins une portion d'arbre horizontal et les moyens de retenue comportent au moins un palier fendu d'axe horizontal présentant une fente d'introduction orientée vers le bas,
- ces moyens de soulèvement et ces moyens de retenue coopèrent au moins en deux zones décalées transversalement,
- les premier et second moyens de butée et de déverrouillage comportent deux butées solidaires l'une de l'autre et une butée indépendante adaptée à venir entre lesdites butées solidaires dans ladite configuration de roulage, une tirette étant montée coulissante dans l'une des butées solidaires entre une configuration retirée où cette tirette laisse la butée indépendante libre de bouger, et une configuration enfoncée où cette tirette traverse l'autre des butées solidaires ainsi que la butée indépendante en configuration de roulage,
- les butées solidaires sont décalées horizontalement l'une de l'autre et la tirette coulisse horizontalement,
- la tirette est sollicitée élastiquement en configuration enfoncée,
- les butées solidaires sont fixées au châssis tandis que la butée indépendante est fixée à la plaque d'ancrage,
- le châssis comporte une plaque horizontale à laquelle est rapportée une plaque verticale portant les moyens de soulèvement et les premiers moyens de butée et de verrouillage,
- la barre de manoeuvre est articulée autour d'un arbre horizontal sur une pièce disposée sous le châssis et articulée à celui-ci autour d'un arbre vertical,
- ladite barre de manoeuvre permet pour les roues, vis à vis d'un plan longitudinal du train, un angle de braquage supérieur à l'angle de manoeuvre de cette barre,
- les moyens complémentaires de rigidification temporaire comportant une barre longitudinale montée coulissante vis à vis de la barre de manoeuvre et un bloc de réception solidaire du châssis et comportant un logement adapté à recevoir l'extrémité avant de la barre longitudinale en une configuration enfoncée de celle-ci,
- ledit bloc de réception est fixé sous le châssis.

Des objets, caractéristiques et avantages de l'invention ressortent de la description qui suit, donnée à titre d'exemple non limitatif, en regard des dessins annexés sur lesquels :
- la figure 1 est une vue en perspective d'un train amovible de roulage conforme à l'invention, dans une configuration autorisant un roulage directif,
- la figure 2 est une vue en perspective de ce train amovible dans une configuration de roulage non directif,
- la figure 3 est une vue en perspective d'un conteneur équipé-en chacune de ses extrémités d'un train amovible conforme à celui des figures 1 et 2,
- la figure 4 est une vue en perspective d'une plaque destinée à être fixée à une extrémité du conteneur pour coopérer avec le train amovible de la figure 1 en vue du roulage directif,
- la figure 5 est une vue partielle de dessus (sans la barre de manoeuvre et sans les renforts de la biellette de la figure 7) du train amovible en configuration de coopération avec la plaque de la figure 4,
- la figure 6 est une vue partielle de côté de ce train amovible (sans les renforts de la biellette de la figure 7),
- la figure 7 est une vue en élévation, selon la flèche VII de la figure 5, de la biellette transversale de direction de ce train amovible,
- la figure 8 est une vue de dessous de cette biellette, selon la flèche VIII de la figure 7,
- la figure 9 est une vue de dessus du châssis du train amovible,
- la figure 10 est une vue en élévation de ce châssis, selon la flèche X de la figure 9,
- les figures 11A et 11B sont des vues en élévation des moyens de verrouillage intégrés au châssis des figures 9 et 10, en configurations de verrouillage et de déverrouillage, respectivement,
- la figure 12 est une vue en élévation de côté du train amovible en cours d'engagement avec une extrémité du conteneur,
- la figure 13 est une vue en élévation, de l'autre côté, de ce train amovible en configuration de roulage, et
- la figure 14 est une vue de dessus du train amovible en position de braquage.

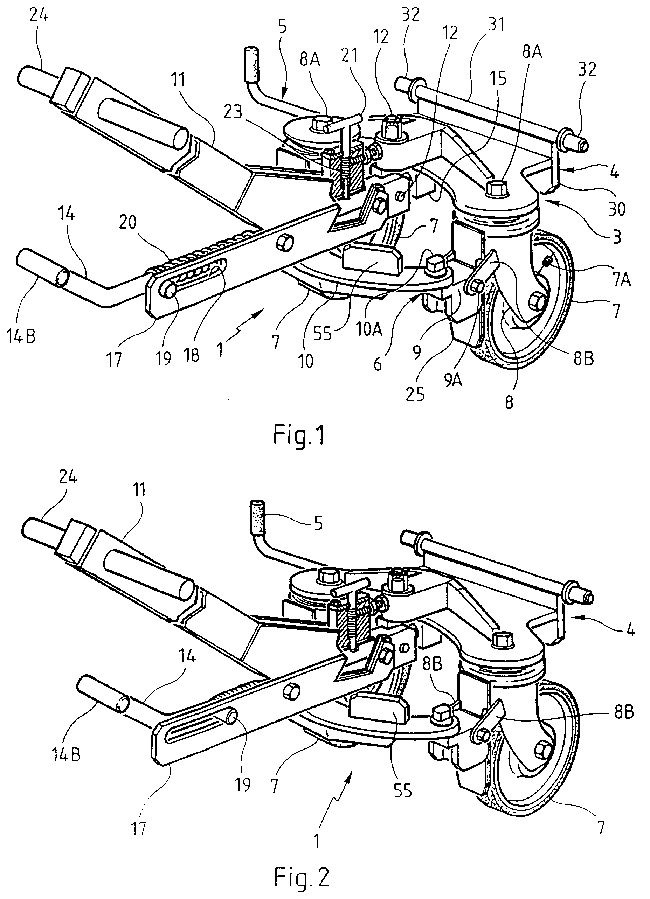

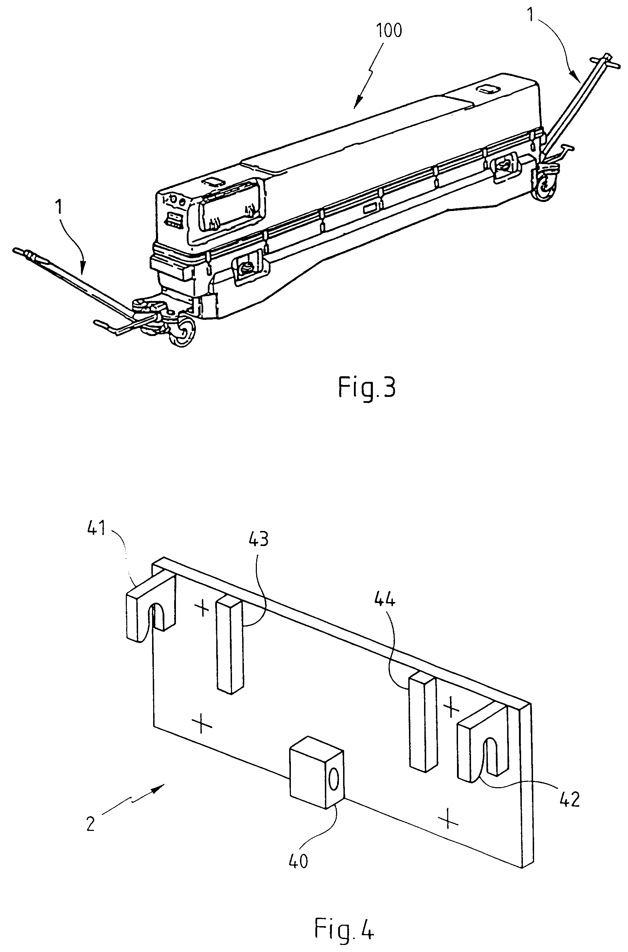

Les figures 1 et 2 représentent un train amovible de roulage directif repéré 1 dans son ensemble, adapté à coopérer avec une plaque d'ancrage rustique telle que celle représentée sous la référence 2 à la figure 4 pour le roulage d'un conteneur quelconque muni de cette plaque 2 à une de ses extrémités.

De préférence ce conteneur, représenté sous la référence 100 à la figure 3, est muni d'une plaque d'ancrage en chacune de ses extrémités et deux trains 1 lui sont temporairement assujettis en vue de son roulage. Le conteneur 100 a une masse de quelques centaines de kilos (il s'agit par exemple d'un conteneur contenant un missile) et les trains 1 sont destinés à permettre son déplacement par la seule force humaine, en tous lieux (y compris en approche sous aéronef ou sous un portique, par exemple) par des manoeuvres d'avant en arrière mais aussi par déplacement latéral en "crabe" et cela en toute sécurité.

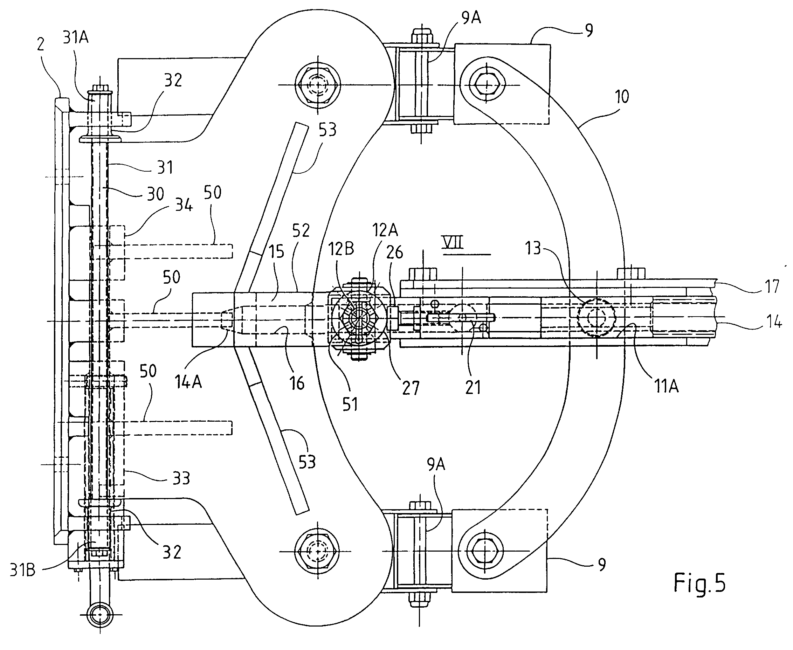

Ce train amovible 1 comporte principalement :
- un châssis 3 muni en sa partie avant de moyens fixes d'ancrage, schématisés en 4 dans leur ensemble, destinés à coopérer avec la plaque d'ancrage 2, ainsi que de moyens de verrouillage schématisés en 5,
- un ensemble directeur schématisé en 6, comportant deux roues 7 droite et gauche (ici munies de graisseurs 7A) montées dans des chapes 8 individuellement articulées sur le châssis 3 autour d'arbres sensiblement verticaux 8A, ces chapes étant attelées l'une à l'autre, en sorte que les roues restent à tout moment parallèles, par un ensemble de biellettes incluant ici deux biellettes longitudinales 9 en pratique très courtes, articulées sur les chapes autour d'arbres sensiblement horizontaux 9A, et une biellette transversale 10 articulée en ses extrémités aux biellettes longitudinales autour d'arbres sensiblement verticaux 10A,
- une barre de manoeuvre 11 articulée au châssis par une double articulation 12 et à la biellette transversale 10 autour d'un pivot 13 sensiblement vertical (voir les figures 5 à 8).

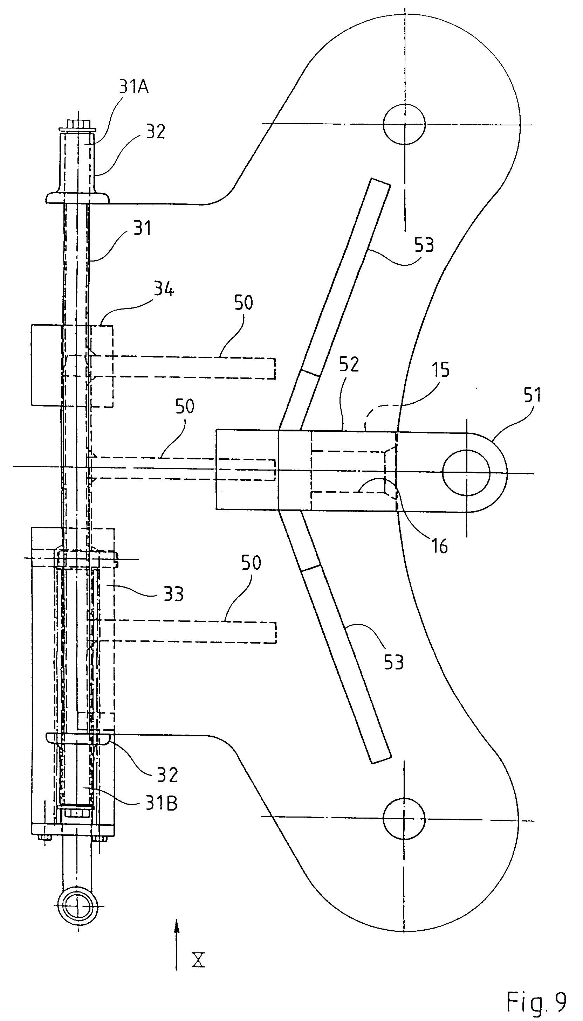

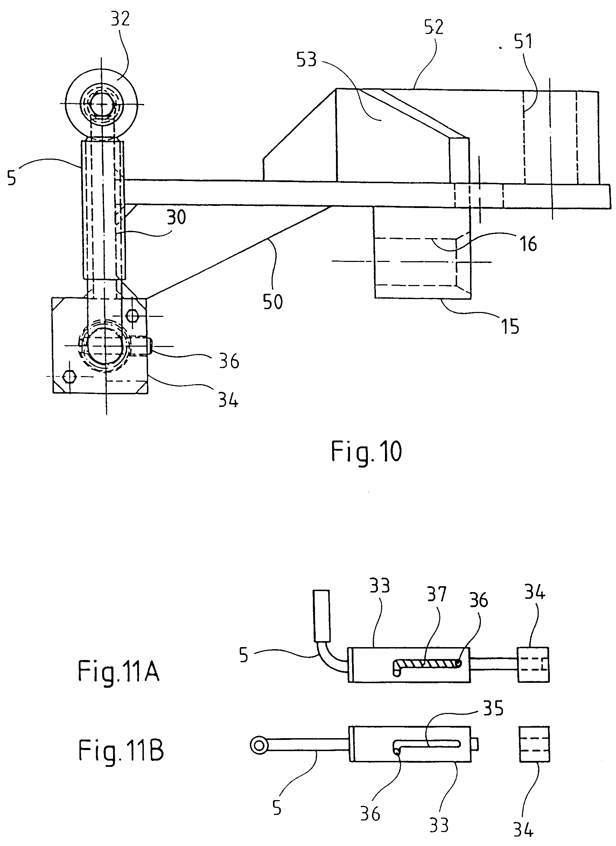

Ce train amovible 1 comporte avantageusement un dispositif de rigidification adapté à solidariser à volonté le châssis 3 et la barre de manoeuvre 11. Ce dispositif de rigidification comporte une barre longitudinale 14 adaptée à coulisser longitudinalement par rapport à la barre de manoeuvre 11 et un bloc 15 solidaire du châssis, muni d'un logement (à peine visible à la figure 1 mais repéré 16 aux figures 9 et 10) adapté à recevoir, ou non, l'extrémité avant 14A de la barre longitudinale 14 selon que celle-ci est reculée (figure 1) ou avancée (figures 2, 5 et 6).

Cette barre coulissante 14 est guidée en coulissement par rapport à la barre de manoeuvre 11 grâce à un flasque latéral 17 fixé à cette barre 11 et dans lequel est ménagée une lumière de guidage 18 dans laquelle coulisse un pion 19 ménagé en saillie radiale sur la barre 14. Ce flasque 17 fige ainsi l'inclinaison entre les barres 11 et 14, laquelle est typiquement choisie entre 33° et 43°. Les extrémités de cette lumière servent de butée pour le pion 19 et délimitent donc le débattement de la barre 14 par rapport au flasque 17. Cette barre est de préférence recourbée en sorte que son extrémité arrière 14B (opposée à l'extrémité 14A susceptible de rentrer dans le bloc 15) soit transversale, ce qui permet à l'opérateur une manoeuvre aisée de cette barre 14, par exemple par poussée du pied.

La barre coulissante 14 est sollicitée élastiquement en l'une de ses positions extrêmes, ici sa position reculée. Ce rappel élastique est ici effectué par un ressort hélicoïdal 20 entourant cette barre 14 et venant en appui contre une portée (non représentée) du flasque ou de la barre 11.

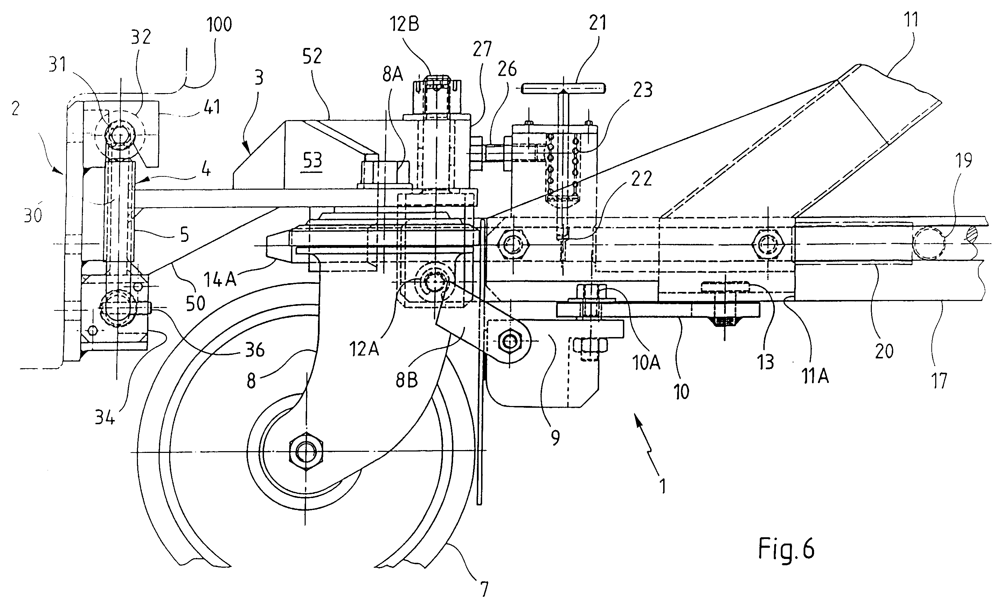

Une tirette de blocage 21 est avantageusement prévue sur la barre de manoeuvre 11 pour coopérer avec un trou borgne 22 (voir figure 6) prévu radialement dans la barre 14 lorsque celle-ci est en position avancée et ainsi bloquer cette barre. Pour libérer la barre 14 il suffit alors de tirer sur cette tirette 21 à l'encontre d'un ressort de rappel 23.

La barre de manoeuvre 11, qui est destinée à être saisie et orientée à volonté par un opérateur, comporte à cet effet une poignée transversale de préhension 24.

Les chapes 8 des roues sont avantageusement munies de plaquettes de frein 25 s'étendant, ici verticalement, entre les biellettes longitudinales 9 et les roues, tandis que lesdites biellettes 9 ont avantageusement une forme massive, s'étendant vers le bas à partir des arbres d'articulation 9A en sorte de former des patins de frein, grâce à quoi tout abaissement intempestif de la barre de manoeuvre 11 provoque un pivotement vers le bas des biellettes 9 et donc une application des plaquettes de frein 25 sur la tranche des roues. Cela assure ainsi, de manière automatique, une immobilisation du train soit en position de roulage (charge à l'arrêt) soit en cas de défaillance de l'opérateur agissant sur la barre 11 puisque celle-ci s'incline alors vers le bas.

Les plaquettes de frein 25 sont interposées horizontalement et maintenues verticalement sur des supports 8B des chapes 8, sur lesquels sont articulées les biellettes 9. En variante non représentée, elles peuvent être fixées aux chapes 8. Elles sont de préférence munies de ressorts de rappel (non représentés) tendant à maintenur les plaquettes à l'écart des roues.

Des butées 26 et 27 (voir aussi les figures 5 et 6) sont avantageusement prévues sur le châssis et la barre de manoeuvre 11 et le châssis 3 pour limiter le redressement de cette barre 11 vis à vis du châssis 3 à une valeur acceptable prédéterminée et éventuellement protéger les plaquettes de frein lorsque celles-ci sont positionnées par rapport aux blocs-biellettes 9. L'une de ces butées, ici la butée 26 portée par la barre 11, est réglable, étant constituée par la tête d'une vis dont l'enfoncement dans la barre 11 peut être ajusté.

On appréciera que l'engagement de la barre 14 dans le bloc 15, qui a pour effet de solidariser cette barre 14 au châssis, a également pour effet de neutraliser le système de freinage rendant ainsi possible la manoeuvre par un seul opérateur qui agira sur le deuxième essieu laissé directif.

Les moyens fixes d'ancrage que comporte le châssis sont, comme leur désignation l'indique, rigidement fixés à ce châssis.

Ces moyens 4 comportent une plaque verticale 30 munie en sa partie supérieure de moyens de soulèvement, ici constitués par les extrémités 31A et 31B d'un barreau transversal 31, lesquelles sont avantageusement revêtues de manchons à faible coefficient de frottement formant bagues d'usure 32 (voir aussi les figures 5, 6, 9 et 10). Cette plaque 30 est par ailleurs munie en sa partie inférieure de moyens de butée (voir les figures 5, 6, 9 et 10) constitués dans l'exemple considéré de deux blocs 33 et 34 présentant des tranches adaptées à être affrontées à la plaque 2 en configuration de roulage.

Les moyens de verrouillage portés par le châssis comportent ici une tirette 5 adaptée à coulisser transversalement à travers chacun des blocs 33 et 34. Ainsi qu'il ressort des figures 5 et 9 l'un, 33, des blocs s'étend sur une partie (de préférence un peu moins de la moitié) de la largeur de la plaque 30, en sorte à la fois de permettre un bon maintien en coulissement de la tirette 5 et de laisser subsister à mi-largeur, conjointement avec l'autre bloc, un espace central pour la venue d'une pièce de butée 40 ménagée sur la plaque 2.

Le bloc 33 comporte une lumière longitudinale en L 35 (voir figures 11A et 11B) dans laquelle pénètre un pion radial 36 ménagé sur la tirette 5, en sorte de délimiter le débattement de celle-ci. La barre transversale du L de la lumière 35 est à l'opposé du bloc 34 grâce à quoi la tirette peut tourner sur elle-même lorsque le pion radial 36 vient en regard de cette barre transversale du L et ainsi se bloquer en position tirée. Un ressort 37 tend à amener élastiquement la tirette en position enfoncée (figure 11A).

La plaque d'ancrage 2 (voir la figure 2) comporte en sa partie supérieure des moyens de retenue adaptés à coopérer avec les moyens de soulèvement 31A et 31B pour former conjointement une articulation temporaire d'axe horizontal. Ces moyens de retenue sont ici constitués de deux crochets 41 et 42 disposés dans les coins supérieurs droite et gauche et dont les fentes d'introduction sont orientées vers le bas. Ces crochets, qui constituent des paliers horizontaux fendus vers le bas, sont adaptés à recevoir par en dessous les extrémités 31A et 31B munies de leurs bagues d'usure 32. Des butées de positionnement 43 et 44 sont prévues pour être en contact avec le barreau transversal 31 lorsque celui-ci est à la verticale par en dessous des fentes d'introduction des crochets.

La plaque 2 est munie en sa partie inférieure de la pièce de butée 40 précitée. Celle-ci est adaptée à venir en butée contre la plaque 30 en configuration de roulage. Cette pièce de butée 40 est traversée par un alésage cylindrique 40A adapté à devenir coaxial avec les logements des blocs de butée 33 et 34 du châssis lorsque ceux-ci sont en butée contre la plaque 2 (et que cette pièce 40 est en butée contre la plaque 30 du châssis 3 si cette plaque descend suffisamment bas) : il est alors possible, par simple pivotement de la tirette 5 depuis la configuration de la figure 11B et profitant de l'action du ressort 37, d'amener cette tirette en position enfoncée, traversant ainsi les pièces 40 et 34, et de verrouiller ainsi le châssis 3 et la plaque 2.

Les figures 5 à 10 font apparaître divers détails de construction du train amovible 1.

On voit ainsi, aux figures 5, 6, et 10, que la fixation rigide de la plaque 30 au châssis est renforcée par des plaques verticales de renforcement 50.

La double articulation reliant le châssis 30 la barre de manoeuvre 11 est située sous la plaque sous laquelle tourillonnent les chapes des roues, avec un arbre horizontal 12A et un arbre vertical 12B (voir figures 5 et 6). Cet arbre vertical 12B est engagé dans un moyeu 51 ménagé sur le châssis 3 dans un bloc massif 52 en saillie vers le haut. Des plaques de renforcement globalement transversales 53 rigidifient ce bloc vis à vis du reste du châssis. C'est également ce bloc 52 qui constitue la butée 27 sur laquelle peut venir en appui la butée réglable 26 (voir figures 5 et 6). On appréciera que cette disposition d'un maximum de pièces entre les roues minimise l'encombrement en hauteur et la hauteur du centre de gravité.

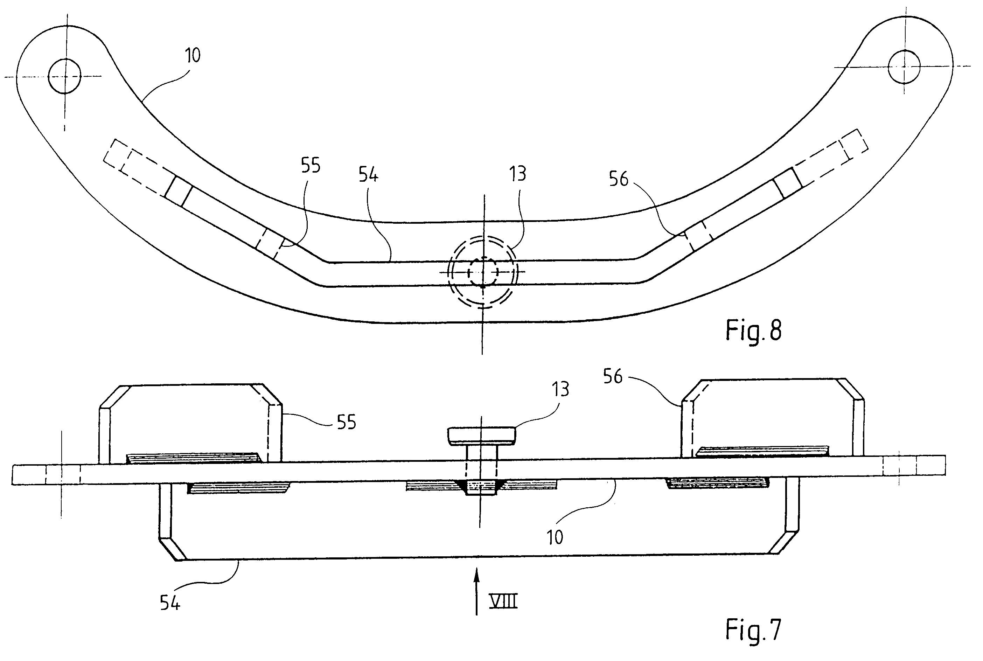

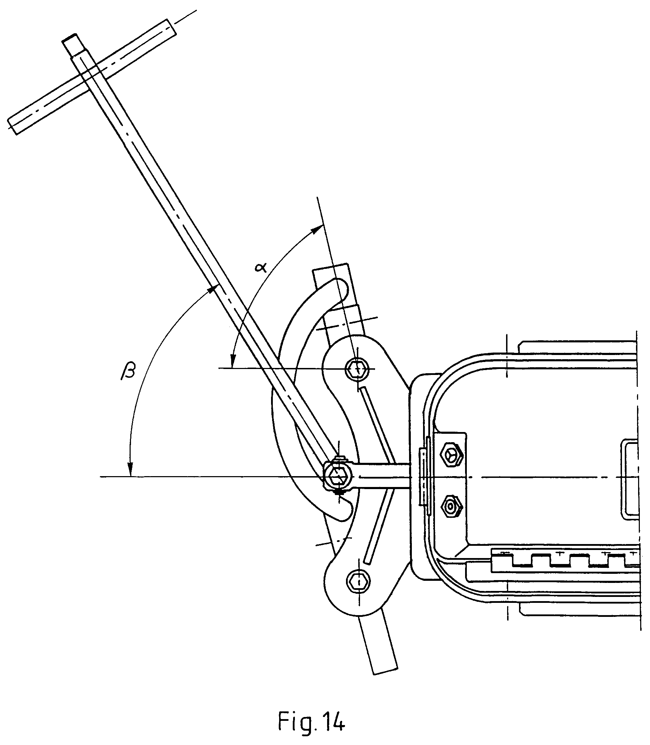

Ainsi qu'il ressort des figures 7 et 8, la biellette transversale 10 est formée d'une plaque horizontale en arc de cercle. Elle est munie, en vue de sa rigidification, d'une paroi verticale courbe 54 qui la longe en dessous (cela a été omis aux figures 5 et 6) ainsi que de deux plaques disjointes 55 et 56 situées sur le dessus et encadrant la barre de manoeuvre 11 lorsque cette dernière est mise en place (voir figures 1 et 2). Ainsi, (voir la figure 14), pour un angle de braquage α d'environ 70° on obtient un angle de manoeuvre β de 50° ; de manière similaire on peut obtenir un angle de braquage de 90° pour un angle de manoeuvre de 70°. De manière générale α > β, où α est l'angle entre le plan vertical des roues et le plan vertical longitudinal du train, et où β est l'angle entre le plan vertical de la barre de manoeuvre et le plan vertical longitudinal du train.

Il est précisé à ce propos que la barre de manoeuvre comporte, pour recevoir le pion 13, une fente destinée à permettre un mouvement longitudinal entre la barre 11 et la biellette 10. On peut noter ici que, en augmentant la longueur de la fente 11A on augmente l'angle de braquage.

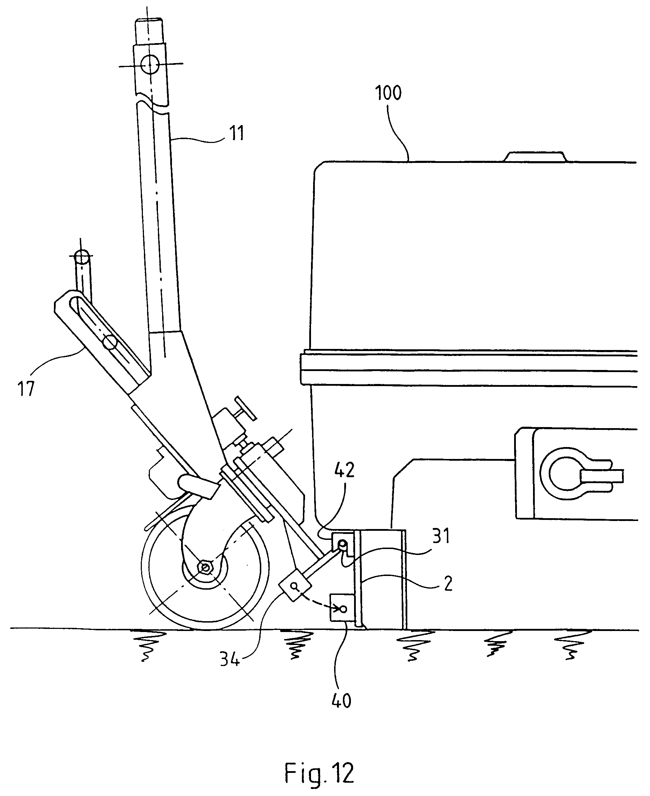

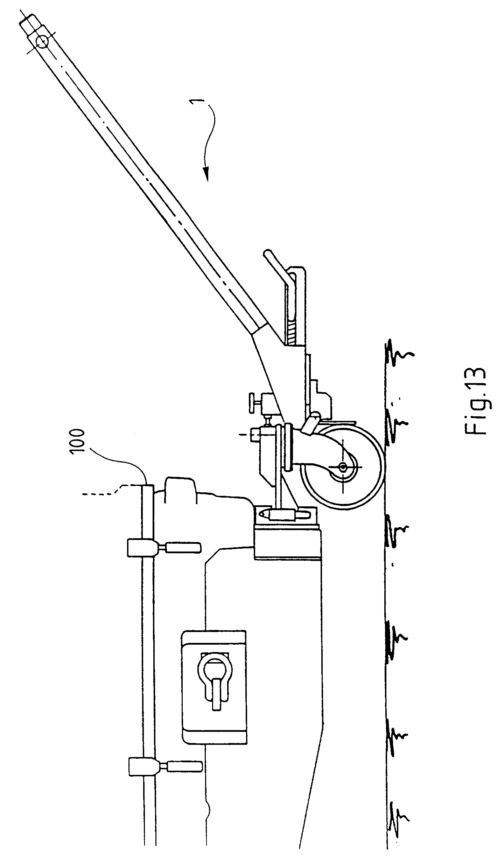

La mise en oeuvre du train amovible qui vient d'être décrit ressort des figures 12, 13 et 14.

Il est tout d'abord précisé que la plaque d'ancrage 2 est fixée sur le conteneur 100 à un niveau tel que les moyens de retenue 41 et 42 soient situés plus bas que les moyens de soulèvement 31A et 31B du châssis lorsque ce dernier est approximativement horizontal (en configuration de roulage).

On commence par rigidifier le train en configuration non directive, c'est-à-dire en engageant la barre 14 vers l'avant jusque dans le bloc 15 du châssis.

On incline ensuite le train ainsi rigidifié vers l'avant jusqu'à amener les moyens de soulèvement 31A et 31B en butée contre la plaque 2 sous les moyens de retenue 41 et 42. Se servant du train rigidifié comme d'un levier, on peut soulever l'extrémité du conteneur en appuyant vers le bas sur la barre de manoeuvre 11. Le mouvement de soulèvement se poursuit jusqu'à la venue en butée des blocs 33 et 34 contre la plaque 2 ; il suffit alors d'actionner la tirette 5 pour verrouiller le train 1 à la plaque 2.

Le même processus est exécuté à l'autre extrémité du conteneur.

On peut alors facilement, si on le souhaite, tirer en arrière la barre de rigidification 14 de l'un ou de chacun des trains pour commencer un roulage directif du conteneur.

Il est clair que l'utilisation de deux trains, tous deux en configuration de roulage directif, est une façon aisée et efficace de réduire les manoeuvres nécessaires pour un positionnement correct du conteneur.

La démarche inverse est suivie lorsqu'il s'agit de déposer le conteneur.

Il va de soi que la description qui précède n'a été proposée qu'à titre d'exemple non limitatif et que de nombreuses variantes peuvent être proposées par l'homme de l'art sans sortir du cadre de l'invention, comme définit par les revendications.

C'est ainsi notamment que l'on peut intervertir les paliers 41 et 42 et le barreau 31 (sous réserve de renverser les paliers).

On appréciera que le train amovible selon l'invention :
- permet une réduction sensible du nombre de manoeuvres de braquage pour amener un conteneur en une position donnée, grâce à la possibilité d'utiliser deux trains directifs,
- garantit une bonne stabilité même en cas de braquage important puisque les arbres verticaux autour desquels tournent les roues restent fixes par rapport au conteneur, d'où une bonne sécurité de manipulation,
- l'éventuelle incorporation d'un dispositif de freinage à ces trains permet une immobilisation aisée du conteneur transporté, aussi bien en statique qu'en dynamique (simple couple du poids de la barre de manoeuvre) ce qui contribue également à une bonne sécurité de manipulation,
- la plaque d'ancrage qui doit être rapportée aux extrémités du conteneur est très simple de constitution,
- le train permet à lui seul le soulevage de la charge jusqu'à la hauteur de roulage sans nécessiter l'intervention d'un quelconque équipement annexe, tel que chariot à fourches,
- par ailleurs, cette hauteur de soulèvement reste modérée,
- le train peut avoir un faible encombrement en hauteur,
- le verrouillage et le déverrouillage des moyens d'ancrage complémentaires ménagés respectivement sur le train et la plaque d'ancrage sont faciles et rapides,
- le verrouillage de la barre de manoeuvre au châssis peut avoir deux fonctions : non seulement rendre non directif le train en cas de roulage, mais aussi permettre le soulevage de la charge.

## Revendications

1. Dispositif pour le soulèvement, le roulage directif et la dépose d'une charge (100), comportant :
- un train amovible (1) comportant un châssis (3), un ensemble directeur (6) et une barre orientable de manoeuvre (11), ce châssis comportant, en une partie avant, des moyens fixes d'ancrage incluant en partie haute des moyens de soulèvement (31A, 31B) et en partie basse de premiers moyens de butée et de verrouillage (5, 33, 34), cet ensemble directeur comportant deux roues directrices (7) montées dans des chapes (8) individuellement articulées sur le châssis autour d'arbres sensiblement verticaux (8A) décalés transversalement l'un par rapport à l'autre et un ensemble de biellettes adapté à maintenir en permanence le parallélisme des roues et incluant deux biellettes longitudinales (9) articulées sur les chapes autour d'arbres sensiblement horizontaux (9A) et une biellette transversale (10) articulée en ses extrémités aux biellettes longitudinales (9) autour d'arbres sensiblement verticaux (10A), et cette barre de manoeuvre étant munie d'une poignée de préhension (24) destinée à un opérateur et étant articulée au châssis par une double articulation (12) et à la biellette transversale (10) autour d'un pivot sensiblement vertical (13), cette barre de manoeuvre et ce châssis étant en outre munis de moyens complémentaires de rigidification temporaire (14, 15) destinés à bloquer, à volonté, la barre de manoeuvre en une orientation prédéterminée vis à vis du châssis,
- une plaque d'ancrage (2) comportant en partie haute des moyens de retenue (41, 42) et en partie basse de seconds moyens de butée et de verrouillage (40), ces moyens de retenue étant adaptés à coiffer par au-dessus les moyens de soulèvement, en sorte de former conjointement une articulation temporaire d'axe transversal, et déboitable seulement par abaissement des moyens de soulèvement vis à vis des moyens de retenue, les premier et second moyens de butée et de verrouillage étant adaptés à coopérer en sorte de verrouiller, lorsque coopèrent les moyens de retenue et de soulèvement, le châssis et la plaque en une configuration dite de roulage, cette plaque d'ancrage étant destinée à être fixée à une extrémité de la charge à une hauteur telle que lorsque le châssis est dans ladite configuration de roulage, les moyens de soulèvement sont situés plus haut que les moyens de retenue.

2. Dispositif selon la revendication 1, caractérisé en ce que le train amovible comporte des moyens d'immobilisation comportant des patins de frein (9) solidaires des biellettes transversales (9) de l'ensemble directeur, et des plaquettes de frein (25) interposées entre ces patins de frein et les roues, le freinage variant avec l'inclinaison vers le bas de la barre de manoeuvre et de la biellette transversale.

3. Dispositif selon la revendication 2, caractérisé en ce que les plaquettes de frein (25) sont interposées horizontalement et maintenues verticalement sur des supports (8B) liés aux chapes.

4. Dispositif selon l'une quelconque des revendications 1 à 3, caractérisé en ce que les moyens de soulèvement comportent au moins une portion d'arbre horizontal (31A, 31B) et les moyens de retenue comportent au moins un palier fendu d'axe horizontal (41, 42) présentant une fente d'introduction orientée vers le bas.

5. Dispositif selon l'une quelconque des revendications 1 à 4, caractérisé en ce que ces moyens de soulèvement et ces moyens de retenue coopèrent au moins en deux zones décalées transversalement (31A, 41 ; 31B, 42).

6. Dispositif selon l'une quelconque des revendications 1 à 5, caractérisé en ce que les premier et second moyens de butée et de déverrouillage comportent deux butées (33, 34) solidaires l'une de l'autre et une butée indépendante (40) adaptée à venir entre lesdites butées solidaires dans ladite configuration de roulage, une tirette (5) étant montée coulissante dans l'une (33) des butées solidaires entre une configuration retirée où cette tirette laisse la butée indépendante libre de bouger, et une configuration enfoncée où cette tirette traverse l'autre (34) des butées solidaires ainsi que la butée indépendante (40) en configuration de roulage.

7. Dispositif selon la revendication 6, caractérisé en ce que les butées solidaires sont décalées horizontalement l'une de l'autre et la tirette (5) coulisse horizontalement.

8. Dispositif selon la revendication 6 ou la revendication 7, caractérisé en ce que la tirette est sollicitée élastiquement en configuration enfoncée.

9. Dispositif selon l'une quelconque des revendications 6 à 8, caractérisé en ce que les butées solidaires (33, 34) sont fixées au châssis tandis que la butée indépendante (40) est fixée à la plaque d'ancrage (2).

10. Dispositif selon l'une quelconque des revendications 1 à 9, caractérisé en ce que le châssis comporte une plaque horizontale à laquelle est rapportée une plaque verticale (30) portant les moyens de soulèvement et les premiers moyens de butée et de verrouillage.

11. Dispositif selon l'une quelconque des revendications 1 à 10, caractérisé en ce que la barre de manoeuvre est articulée autour d'un arbre horizontal (12A) sur une pièce disposée sous le châssis et articulée à celui-ci autour d'un arbre vertical (12B).

12. Dispositif selon la revendication 11, caractérisé en ce que ladite barre de manoeuvre permet pour les roues, vis à vis d'un plan longitudinal du train, un angle de braquage supérieur à l'angle de manoeuvre de cette barre.

13. Dispositif selon l'une quelconque des revendications 1 à 12, caractérisé en ce que les moyens complémentaires de rigidification temporaire comportant une barre longitudinale (14) montée coulissante vis à vis de la barre de manoeuvre et un bloc de réception (15) solidaire du châssis et comportant un logement (16) adapté à recevoir l'extrémité avant de la barre longitudinale en une configuration enfoncée de celle-ci.

14. Dispositif selon la revendication 13, caractérisé en ce que ledit bloc de réception est fixé sous le châssis.

## Claims

1. Device for lifting, steerably moving and putting down a load (100) including:
- a removable dolly (1) including a chassis (3), a steering system (6) and an orientable maneuvering bar (11), said chassis comprising, in a front part, fixed anchor means including in the upper part lifting means (31A, 31B) and in the lower part first abutment and locking means (5, 33, 34), said steering system including two steerable wheels (7) mounted in yokes (8) individually pivoted to the chassis about substantially vertical shafts (8A) offset transversely relative to each other and a system of links adapted to hold the wheels parallel at all times and including two longitudinal links (9) pivoted to the yokes about substantially horizontal shafts (9A) and a transverse link (10) articulated at its ends to the longitudinal links (9) about substantially vertical shaft (10A), said maneuvering bar being provided with a gripping handle (24) for use by an operator and being pivoted to the chassis by a double pivot (12) and to the transverse link (10) about a substantially vertical pivot (13), said maneuvering bar and said chassis being further provided with complementary temporary locking means (14, 15) adapted to immobilize the maneuvering bar in a predetermined orientation relative to the chassis, as required,
- an anchor plate (2) including in the upper part retaining means (41, 42) and in the lower part second abutment and locking means (40), said retaining means being adapted to be fitted over the lifting means from above so as to form conjointly a temporary pivot with a transverse axis disengagable only by lowering of the lifting means relative to the retaining means, the first and second abutment and locking means being adapted to cooperate to lock the chassis and the plate in a movable configuration when the retaining and lifting means cooperate, said anchor plate being adapted to be fixed to one end of the load at a height such that when the chassis is in said movable configuration the lifting means are higher than the retaining means.

2. Device according to claim 1 characterized in that the removable dolly includes immobilizing means including brake shoes (9) fastened to the transverse links (9) of the steering system and brake plates (25) disposed between said brake shoes and the wheels, the braking action varying with the downward inclination of the maneuvering bar and the transverse link.

3. Device according to claim 2 characterized in that the brake plates (25) are disposed horizontally and held vertically on supports (8B) attached to the yokes.

4. Device according to any one of claims 1 to 3 characterized in that the lifting means include at least one horizontal shaft portion (31A, 31B) and the retaining means include at least one horizontal axis split bearing (41, 42) having a downwardly directed entry slot.

5. Device according to any one of claims 1 to 4 characterized in that said lifting means and said retaining means cooperate in at least two areas offset transversely (31A, 41; 31B, 42).

6. Device according to any one of claims 1 to 5 characterized in that the first and second abutment and locking means include two abutments (33, 34) fastened together and an independent abutment (40) adapted to engage between said fastened together abutments in said rolling configuration, a rod (5) being mounted in one (33) of the fastened together abutments to slide between a pulled out configuration wherein said rod allows the independent abutment to move freely and a pushed in configuration in which said rod passes through the other (34) of the fastened together abutments and the independent abutment (40) in the movable configuration.

7. Device according to claim 6 characterized in that the fastened together abutments are offset horizontally from each other and the rod (5) slides horizontally.

8. Device according to claim 6 or claim 7 characterized in that the rod is spring-loaded into the pushed in configuration.

9. Device according to any one of claims 6 to 8 characterized in that the fastened together abutments (33, 34) are fixed to the chassis and the independent abutment (40) is fixed to the anchor plate (2).

10. Device according to any one of claims 1 to 9 characterized in that the chassis includes a horizontal plate to which is attached a vertical plate (30) carrying the lifting means and the first abutment and locking means.

11. Device according to any one of claims 1 to 10 characterized in that the maneuvering bar is pivoted about a horizontal shaft (12A) to a member disposed under the chassis and pivoted to the latter about a vertical shaft (12B).

12. Device according to claim 11 characterized in that said maneuvering bar enables a turning angle of the wheels relative to a longitudinal plane of the dolly greater than the maneuvering angle of the bar.

13. Device according to any one of claims 1 to 12 characterized in that the complementary temporary locking means include a longitudinal bar (14) mounted to slide relative to the maneuvering bar and a receiving block (15) fastened to the chassis and including a housing (16) adapted to receive the front end of the longitudinal bar in a pushed in configuration of the latter.

14. Device according to claim 13 characterized in that said receiving block is fixed under the chassis.

## Patentansprüche

1. Vorrichtung zum Anheben, gerichteten Befördern und Absetzen einer Last (100), aufweisend:
- ein abnehmbares Fahrgestell (1), das ein Untergestell (3), eine Lenkeinheit (6) und eine schwenkbare Manovrierstange (11) aufweist, wobei dieses Untergestell in einem vorderen Teil ortsfeste Verankerungsmittel aufweist, die im oberen Teil Hebemittel (31A, 31B) und im unteren Teil erste Anschlag- und Verriegelungsmittel (5, 33, 34) einschließen, wobei diese Lenkeinheit zwei Leiträder (7), die in Gabelgelenken (8) angebracht sind, welche auf dem Untergestell individuell um im wesentlichen vertikale, transversal gegeneinander versetzte Achsen (8A) beweglich gelagert sind, und eine Schwingarmeinheit aufweist, die dafür ausgelegt ist, die Räder ständig parallel zu halten und zwei longitudinale Schwingarme (9), die auf den Gabelgelenken um im wesentlichen horizontale Achsen (9A) beweglich gelagert sind, und einen transversalen Schwingarm (10) einschließt, der an seinen Enden an den longitudinalen Schwingarmen (9) um im wesentlichen vertikale Achsen (10A) beweglich gelagert ist, und wobei diese Manovrierstange mit einem Festhaltegriff (24) versehen ist, der für eine Bedienungsperson gedacht ist und am Untergestell durch eine Doppelgelenkverbindung (12) und am transversalen Schwingarm (10) um einen im wesentlichen vertikalen Zapfen (13) beweglich gelagert ist, wobei diese Manövrierstange und dieses Untergestell außerdem mit komplementären Mitteln (14, 15) zur zeitweiligen Verstärkung versehen sind, die dafür bestimmt sind, die Manövrierstange in einer vorgegebenen Ausrichtung gegenüber dem Untergestell beliebig zu blockieren,
- eine Verankerungsplatte (2), die im oberen Teil Haltemittel (41, 42) und im unteren Teil zweite Anschlag- und Verriegelungsmittel (40) aufweist, wobei diese Haltemittel dafür ausgelegt sind, die Hebemittel von oben zu überdecken, so daß sie zusammen eine zeitweilige Gelenkverbindung mit einer transversalen Achse bilden, die nur durch Absenken der Hebemittel gegenüber den Haltemitteln auseinandergenommen werden kann, wobei die ersten und zweiten Anschlag- und Verriegelungsmittel dafür ausgelegt sind, so zusammenzuwirken, daß sie, wenn die Haltemittel und die Hebemittel zusammenwirken, das Untergestell und die Platte in einer Beförderungskonfiguration verriegeln, wobei diese Verankerungsplatte dafür bestimmt ist, an einem Ende der Last in einer solchen Höhe befestigt zu werden, daß, wenn sich das Untergestell in der Beförderungskonfiguration befindet, die Hebemittel höher als die Haltemittel gelegen sind.

2. Vorrichtung nach Anspruch 1, dadurch gekennzeichnet, daß das abnehmbare Fahrgestell Immobilisierungsmittel aufweist, die mit den transversalen Schwingarmen (9) der Lenkeinheit einstückige Bremsschuhe (9) und zwischen diese Bremsschuhe und die Räder gesetzte Bremsscheiben (25) aufweisen, wobei die Bremsung mit der Neigung der Manövrierstange und des transversalen Schwingarms nach unten variiert.

3. Vorrichtung nach Anspruch 2, dadurch gekennzeichnet, daß die Bremsscheiben (25) horizontal zwischen mit den Gabelgelenken verbundene Träger (8B) gesetzt sind und auf ihnen vertikal gehalten werden.

4. Vorrichtung nach einem der Ansprüche 1 bis 3, dadurch gekennzeichnet, daß die Hebemittel mindestens einen horizontalen Achsenabschnitt (31A, 31B) aufweisen und die Haltemittel mindestens ein geteiltes Lager (41, 42) mit horizontaler Achse aufweisen, das einen nach unten gerichteten Einführschlitz aufweist.

5. Vorrichtung nach einem der Ansprüche 1 bis 4, dadurch gekennzeichnet, daß diese Hebemittel und diese Haltemittel mindestens an zwei transversal versetzten Zonen (31A, 41; 31B, 42) zusammenwirken.

6. Vorrichtung nach einem der Ansprüche 1 bis 5, dadurch gekennzeichnet, daß die ersten und zweiten Anschlag- und Verriegelungsmittel zwei miteinander einstückige Anschläge (33, 34) und einen unabhängigen Anschlag (40) aufweisen, der dafür ausgelegt ist, in der Beförderungskonfiguration zwischen die einstückigen Anschläge zu gelangen, wobei eine Zugstange (5) in einem (33) der einstückigen Anschläge zwischen einer eingezogenen Konfiguration, in der diese Zugstange den unabhängigen Anschlag frei beweglich läßt, und einer Senkkonfiguration, in der diese Zugstange den anderen (34) der einstückigen Anschläge durchdringt, so daß der unabhängige Anschlag (40) in die Beförderungskonfiguration gelangt, verschiebbar angebracht ist.

7. Vorrichtung nach Anspruch 6, dadurch gekennzeichnet, daß die einstöckigen Anschläge horizontal gegeneinander versetzt sind und die Zugstange (5) horizontal verschoben wird.

8. Vorrichtung nach Anspruch 6 oder 7, dadurch gekennzeichnet, daß die Zugstange in ihrer Senkkonfiguration elastisch belastet ist.

9. Vorrichtung nach einem der Ansprüche 6 bis 8, dadurch gekennzeichnet, daß die einstückigen Anschläge (33, 34) am Untergestell befestigt sind, während der unabhängige Anschlag (40) an der Verankerungsplatte (2) befestigt ist.

10. Vorrichtung nach einem der Ansprüche 1 bis 9, dadurch gekennzeichnet, daß das Untergestell eine horizontale Platte aufweist, an der eine vertikale Platte (30), die die Hebemittel und die ersten Anschlag- und Verriegelungsmittel trägt, angestückt ist.

11. Vorrichtung nach einem der Ansprüche 1 bis 10, dadurch gekennzeichnet, daß die Manövrierstange um eine horizontale Achse (12A) beweglich auf einem Teil gelagert ist, welches unter dem Untergestell angeordnet und an ihm um eine vertikale Achse (12B) beweglich gelagert ist.

12. Vorrichtung nach Anspruch 11, dadurch gekennzeichnet, daß die Manövrierstange für die Räder gegenüber einer longitudinalen Ebene des Fahrgestells einen Lenkausschlagwinkel zuläßt, der größer ist als der Manövrierwinkel dieser Stange.

13. Vorrichtung nach einem der Ansprüche 1 bis 12, dadurch gekennzeichnet, daß die komplementären Mittel zur zeitweiligen Verstarkung eine longitudinale Stange (14), die verschiebbar gegenüber der Manövrierstange angebracht ist, und einen Aufnahmeblock (15) aufweisen, welcher mit dem Untergestell einstückig ist und einen Sitz (16) aufweist, der dafür ausgelegt ist, das vordere Ende der longitudinalen Stange bei einer Senkkonfiguration derselben aufzunehmen.

14. Vorrichtung nach Anspruch 13, dadurch gekennzeichnet, daß der Aufnahmeblock unter dem Untergestell befestigt ist.
